# EUROPEAN PATENT SPECIFICATION

(11) **EP 2 708 351 B1**
(45) Date of publication and mention of the grant of the patent: **21.02.2018**
(21) Application number: 13184055.5
(22) Date of filing: 12.09.2013
(51) Int. Cl.: B29D 30/00, B29D 30/06

(54) **Tire loader, green tire preformer and tire loader system and methods for loading a green tire onto a tire press and for bringing the bead areas of a tire into alignment**
Reifenlader, Rohreifenvorformer- und Reifenlade-system und Verfahren zum Laden eines Reifenrohlings auf eine Reifenpresse und um die Wulstbereiche eines Reifens auszurichten
Chargeur de pneu, système comprenant un dispositif de préformage de pneus crus, dispositif de chargement de pneus dans une presse et procédés de chargement d'un pneu cru dans une presse à pneumatiques et permettant d'amener les zones de talon d'un pneu en alignement

(30) Priority: 13.09.2012 US 201261700495 P; 13.09.2012 US 201261700488 P; 21.02.2013 US 201313773035; 26.02.2013 US 201313776903
(43) Date of publication of application: 19.03.2014
(73) Proprietor: The Goodyear Tire & Rubber Company, Akron, Ohio 44316 (US)
(72) Inventor: Delgado, Andres Ignacio, Medina, OH Ohio 44256 (US); Bator, Eugene Andrew, Diamond, 44412 (US)
(74) Representative: Kutsch, Bernd

(56) References cited:
- EP-A2- 0 032 353
- DD-A1- 117 200
- US-A- 2 812 546
- US-A- 3 153 263
- US-A- 3 378 882
- US-A- 3 659 975
- US-A- 3 948 591
- US-A- 4 236 883
- US-A- 4 447 385
- US-A- 4 449 903
- US-A- 4 472 125
- US-A- 4 474 399
- US-A- 4 545 750
- US-A- 4 608 219
- US-A- 4 874 303

## Description

### Field of the Invention

The present invention is directed to tire manufacturing, and more particularly to an apparatus, a system and methods for processing of a green tire.

### Background of the Invention

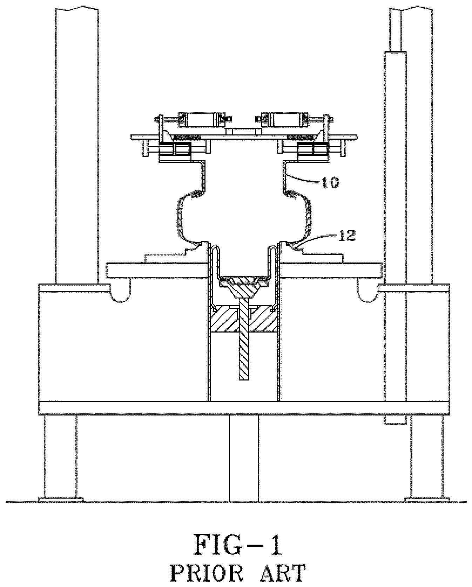

Tire uniformity is important to overall tire performance. One aspect of tire uniformity that may occur is when the opposed tire beads are not concentric and parallel to each other. This nonuniformity may occur during the tire building process, tire storage during loading of the tire into the tire press prior to cure, or during the press shaping cycle. FIG. 1 illustrates a prior art tire loader loading a tire into a tire press. The tire loader 10 grasps the tire bead from the top of the tire, and seats the tire onto a bottom mold bead ring 12. One problem with the prior art loader is that the lower tire bead region has not been rotated into engagement with the bottom bead ring. A second problem is that the green tire may not be centered onto the lower bead ring or the mold. Further, the top bead of the green tire may not be concentric and parallel with the bottom bead.

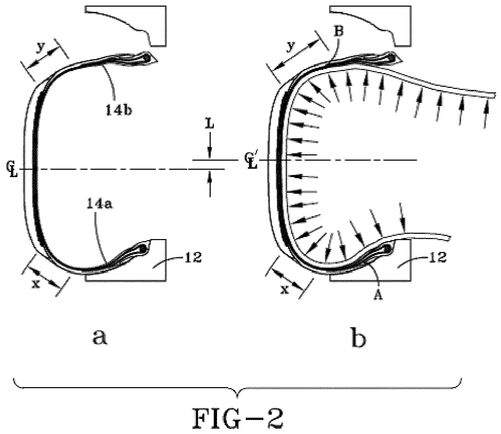

FIG. 2a illustrates a tire having a bead seated in the bottom mold ring prior to shaping and with the mold in the open position. As shown, the lower bead region 14a is constrained by the lower bead ring 12, while the upper bead region 14b is free. FIG. 2b illustrates the green tire during shaping of the curing bladder. FIG. 2b illustrates that the lower ply endings A near the bottom bead ring are trapped between the bladder and the bottom bead ring so that they cannot move. As the mold is not closed during bladder shaping, the upper ply endings B are pulled by the bladder to lengthen the Y dimension due to the unconstrained upper tire bead. In addition, the upper bead area may rotate in an undesired direction. The centerline C_{L}' of the tire may also shift a lateral distance L from the desired centerline C_{L}, resulting in conicity. As shown in FIG. 2b, tire nonuniformity occurs in the press as X and Y are not equal, and the tire centerline has moved laterally a distance L. When the press closes, the top bead ring engages the top bead, and forces the top bead area to rotate around the top bead. However, the closing of the press does not solve the issues described above, and a tire with uniformity issues may be formed.

It is thus desired to provide an improved method for preforming the green tire prior to entry into the mold to ensure that the tire bead areas are concentric and parallel to each other. It is further desired to provide an improved method that ensures the top and bottom bead areas are rotated into the proper cured position prior to placement into the tire mold and when loaded into the mold.

US-A-4,472,125 describes a tire loader in accordance with the preamble of claim 1. Further tire loaders are described in US-A-4,447,385, US-A-4, 449,903, US-A-4,608,219, DD-A-117 200 und US-A-4,874,303.

Methods for bringing the bead areas of a green tire into alignment with each other are described in US-A-2,812,546, US-A-3,153,263, US-A-3,948,591, US-A-4,545,750, US-A-3,659,975 und US-A-4,236,883.

### Summary of the Invention

The invention relates to a tire loader in accordance with claim 1, to a system in accordance with claim 6, and to a method in accordance with claim 8.

Dependent claims refer to preferred embodiments of the invention.

The invention provides in a first preferred aspect a method for preforming a green tire to a predetermined position prior to insertion into a tire mold. The green tire has opposing first and second bead areas. The method includes the following steps: holding a first and second bead of the green tire in a concentric and parallel position, moving one of the first and second beads towards the other, rotating the first and second bead areas into a predetermined position, and then holding the first and second beads and bead areas in the predetermined position for a set period of time indexing the green tire and repeating the rotation several times.

The invention provides in a second preferred aspect a method for aligning the bead areas of green tire into alignment with each other. The method includes the following steps: providing a first bead support ring and mounting the lower bead of the green tire onto said first bead support ring, providing a second bead support ring and moving the second bead support ring into engagement with the upper bead of the tire until the tire is in a desired pre-mold position, and rotating the first and second bead areas of the tire into the desired pre-mold shape.

The invention provides in a further preferred aspect a green tire preformer apparatus for rotating the bead areas of the tire into alignment with respect to each other, the green tire preformer apparatus includes a first support having a first bead ring to support a first tire bead area of a green tire, the green tire having opposing first and second tire bead areas, and a second support having a second bead ring positionable for engagement with the second tire bead area; and first and second rotatable bead clamps, wherein the first and second rotatable bead clamps are positioned to clamp the first and second bead areas into engagement with the first and second bead rings, respectively. The invention provides in a second aspect, a tire loader that has had a bead support ring and paddles to grip the outer crown portion of the tire.

The invention provides in yet a further preferred aspect a tire loader comprising a support frame, a plurality of tire engaging chucks or paddles mounted to the support frame and arranged in an annular manner to grip a tire, each tire engaging chuck or paddle being radially movable, the tire loader further including a bead support ring .

### Brief Description of the Drawings

The invention will be described by way of example and with reference to the accompanying drawings in which:
FIG. 1 illustrates a prior art loader loading a green tire into a tire press.
FIG. 2a is a cross sectional view of a green tire partially mounted on the bottom mold bead ring prior to engagement of the shaping bladder and mold closing;
FIG. 2b is a cross sectional view of a green tire partially mounted and shaped on the bottom bead ring of the tire mold during bladder shaping;
FIG. 3 is a cross sectional front view of a green tire pre-former of the present invention shown in the start position without a green tire;
FIG. 4 is a cross sectional front view of a green tire pre-former of the present invention shown in the start position with a green tire and green tire loader;
FIG. 5 and 5a are cross sectional views of the bottom mold bead ring support with translating support ring;
FIG. 6 is a cross sectional front view of a green tire pre-former of the present invention shown in the loaded and lowered position with a green tire and green tire loader;
FIG. 7 is a cross sectional front view of a green tire pre-former of the present invention shown with the loader upper mold bead support ring engaging the top bead of the green tire prior to the material rotation around the beads;
FIG. 8 is a cross sectional front view of a green tire pre-former of the present invention shown in the actuated/clamped position, after rotating the bead area material around both the top and bottom beads but prior to the loader grasping the outside diameter of the green tire;
FIG. 9 is a cross sectional front view of a green tire pre-former of the present invention shown with both bead areas rotated and the green tire grasped in the loader for transport;
FIG. 10a illustrates the green tire prior to shaping or lower bead area rotation;
FIG. 10b illustrates the green tire after upper and lower bead area rotation, but prior to shaping.
FIG. 11 illustrates a green tire being loaded onto the tire preforming apparatus.
FIG. 12 illustrates a green tire loaded onto the tire preforming apparatus.
FIG. 13a illustrates a green tire after the upper and lower bead support rings have positioned the tire beads to the cured bead height; FIG. 13b illustrates the bead clamps after rotation around the bead against both bead support rings.
FIG 14 illustrates the tire in the loader; with tire held on outside diameter.
FIG. 15 illustrates the green tire being placed on the bottom mold bead ring.
FIGS. 16 -21 illustrate the various stages of the modified tire curing process.

### Detailed Description of the Invention

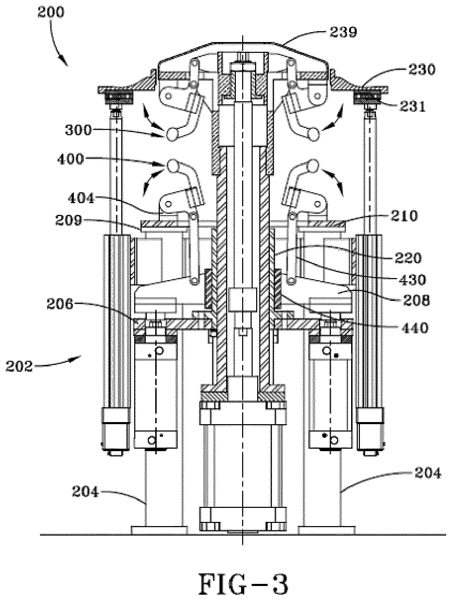

FIG. 3 illustrates a green tire pre-former apparatus 200 of the present invention. The green tire pre-former apparatus 200 is useful for pre-forming a green tire so that the overall tire shape matches the cured tire shape, and the tire beads are concentric and parallel with respect to each other prior to entry into the mold. The tire pre-former apparatus 200 comprises a support frame 202 that has three or more support legs 204 joined together by a stationary lower support plate 206. An annular center support outer column 220 extends vertically upwards from the support plate 206 guiding a center support inner column. A lower spider ring 208 is slidably mounted on center support outer column 220. Support frame 202 further comprises a stationary upper support plate 210 that is connected to the lower support plate via a plurality of support frame columns 209.

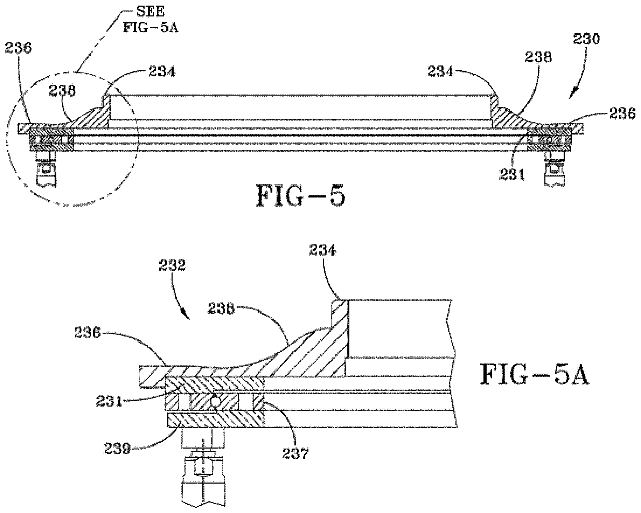

The green tire pre-former apparatus 200 further comprises a lower bead support ring 230. The lower bead support ring 230 is shown in FIG. 3 in a raised position suitable for loading the green tire onto the pre-former apparatus. As best shown in FIG. 5a, the lower bead support ring 230 has a lower surface mounted to an upper ring 231. The upper ring may be optionally connected to a rotatable bearing 237 so that the upper ring is free to rotate. The rotatable bearing 237 is connected to a bearing support plate 239. The lower surface of the bearing support plate 239 is mounted to a distal end 232 of a translating rod. Thus the lower bead support ring may be raised and lowered via translating rods, and may also be rotated radially around the center column via rotatable bearing ring 237. A gear rack is positioned for engagement with the rotatable bearing ring 237 in order to precisely position the lower bead support ring 230. A programmable rotation-positioning device may optionally be used to position the rotatable bearing ring 237.

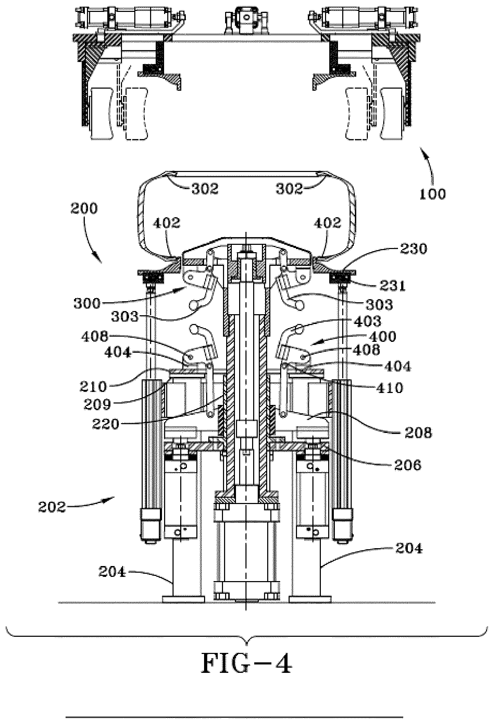

The lower bead support ring 230 as shown in FIG. 5A has a bead support extending radially outward from the support ring 230. The bead support has an annular lip 234 located axially inward of the bead support. The annular lip is straight and has no taper. The bead support has a flat portion 236 located axially outward on the support ring. The bead support 232 further comprises an angled seat 238 that joins the annual lip 234 to the flat portion 236. The angled seat 238 helps cam over the bead area material into the proper cured alignment position. The green tire pre-former apparatus 200 further comprises a top hat which facilitates the proper centering of the green tire bead and tire onto the lower bead support ring of the green tire pre-former apparatus. FIG. 4 illustrates a green tire loaded onto the green tire pre-former apparatus with support ring 231 in the raised position with the lower sidewall bead area of the green tire in mating engagement with the lower bead support ring 230.

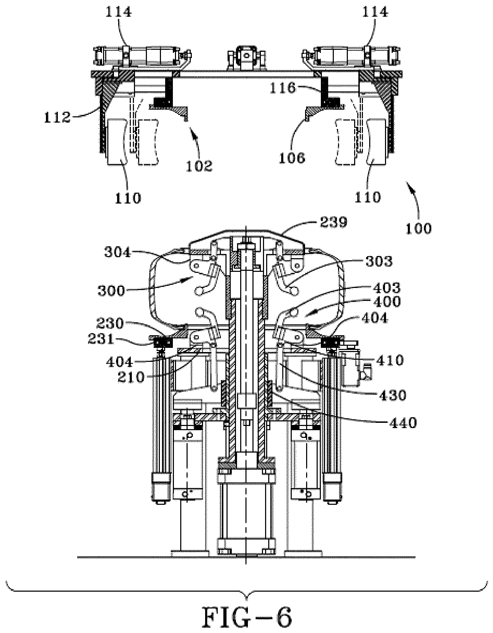

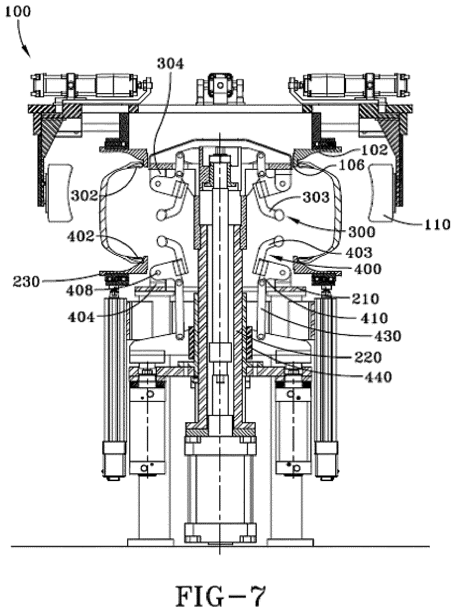

After the green tire has been lowered on the green tire pre-former apparatus 200 as shown in FIG. 6, the green tire loader 100 is lowered into the support/grasp position around the green tire as shown in FIG. 7. The green tire loader 100 includes an upper support ring 102 for engaging and supporting the upper bead of the green tire. The upper support ring 102 may optionally be rotatable, as described in more detail, below. The loader 100 with a rotatably mounted upper support ring 102 is lowered until the inner radial lip 106 of the upper bead support ring 102 engages the top bead of the green tire. The green tire loader further includes a plurality of tire engaging paddles or chucks 110. Each tire chuck is independently radially movable on a rail support 112 connected to a pneumatically driven piston 114. Each chuck is lockable at its own unique tread radius position thus holding and maintaining the concentricity of the top tire bead to the top bead lip ring 102. FIG. 6 shows the rotatable upper bead support ring 102 mounted on a support structure 116 in order to stabilize the support ring, facilitate bead size, provide for ring size changes, and position the support ring 102 adjacent to the tire engaging chucks 110.

As shown in FIG. 7, the green tire pre-former device further comprises upper and lower bead clamps, 300 and 400, which rotate and engage the inner tire bead area 302 and 402, thus causing the green tire bead area components 302 and 402 to rotate around the upper and lower bead support rings 230, 102 (including their angled seats 238, and their straight, non-tapered annular lips 234, 106) until the inner tire bead areas 302, 402 are held securely against the flat areas 236. The bead area components are able to rotate around the bead ring because the support rings 102,230 have no tapered lips which prevent the rotation. The bead area components 302,402 are the tire components that are rotated around the bead ring, which include the rim strip, inner liner, apex, the ply, and typically the lower sidewall below the turnup. Depending on tire design, other components around the bead area will also be rotated.

A plurality of upper and lower bead clamps 300, 400 are arranged in an annular fashion and are positionable to engage the tire bead area components 302, 402. The bead clamps 300, 400 include curved or L shaped fingers that are adjustable in length and function to grip the tire bead area components 302, 402 into engagement with the support rings 102, 230. The bead clamps 300, 400 are pneumatically actuated in multiple partial steps, performed sequentially that ultimately result in the complete uniform rotation of the tire bead area components 302, 402 into engagement with the flat areas 236 of the bead support rings 102, 230. The bead clamps are pivotally mounted to support flanges 304 and 404. The lower bead clamps 400 are positioned in an annular arrangement adjacent to the lower bead ring 230. The lower bead clamps rotate about pin 408 of flange 404. Flanges 404 are mounted to the support plate 210 of the tire pre-former. The lower bead clamps include a bead clamp pivot 410 having an outer end rigidly connected to the bead finger 403 and an inner end pinned to the support flange 404, so that rotation of the bead clamp pivot 410 rotates the bead finger 403 about pin 408. Bead clamp pivot 410 has a distal end connected to arm 430. Arm 430 is pin connected to lower spider ring 208, which slides on center support outer column 220. Thus rotation of the lower bead area into the desired shape occurs during actuation of the arms 430 via sliding spider ring 208 pushed by a pneumatic actuator.

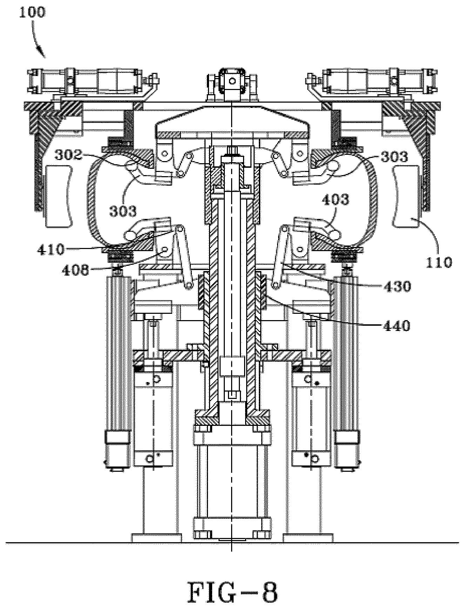

FIG. 8 illustrates the upper and lower bead clamps after being rotated into position so that the bead area components 302, 402 engage with the upper and lower bead rings 102, 230. This position is held for a period of time sufficient for the green tire to retain its shape, typically in the range of 2 to 10 minutes. The time may vary depending upon the particular tire size and components used. Next, the upper and lower bead clamps are unclamped, and the upper and lower bead support rings are rotationally indexed, and then the clamps are actuated. The above steps are repeated until the green tire has rotated a complete circle.

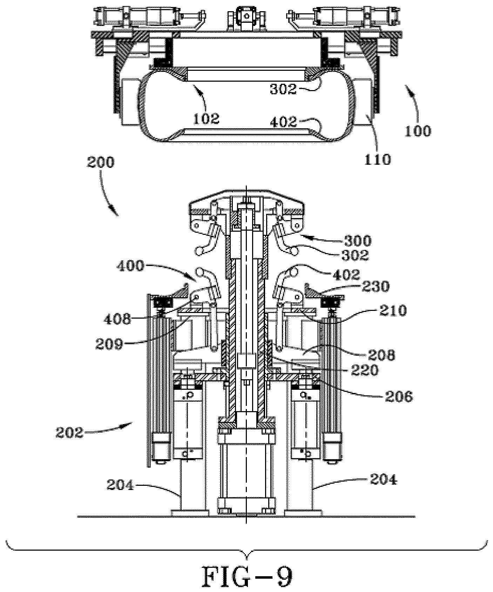

FIG. 9 illustrates the green tire loaded in the loader 100 after removal from the pre-former 200. The loader 100 grips the outer radial surface of the tread region of the green tire. The upper bead area of the green tire is still in engagement with the rotatable upper bead ring support 102 to ensure the bead area 302 remains concentric to the bead center and supported during entry of the curing bladder at shaping.

The green tire loader 100 has been designed to engage the tire without negatively affecting lower bead area rotation or bead concentricity and parallelism. The tire loader 100 has several features built in to enhance uniformity. First when grasping the green tire for transport to the press, the loader 100 tire chucks grip only the crown of the outside of the tread area. Prior art loaders grasp the inside of the top bead that would cause a negative rotation of the material around the top bead. Typical prior art loader fingers do not address concentricity of either the top or bottom bead, so as a result parallelism of the two beads is also at risk. The loader 100 maintains the centering of the bottom bead by using multiple independently lockable cylinders to grasp the tread crown without distorting the upper and lower bead center to tread relationship. Finally the loader 100 contains the top bead ring support that maintains rotation, concentricity, and parallelism, during curing bladder shaping, and the transfer of the green tire to the curing press.

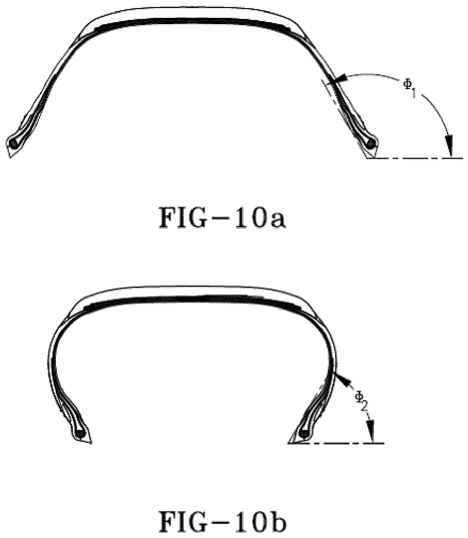

FIG. 10a illustrates a typical green tire prior to being shaped. The bead areas of the green tire have a reverse curvature as compared to the green tire of FIG. 10b. In FIG. 10b, the beads are located axially inward of the tread shoulders, as compared to FIG. 10a in which the beads are located axially outward of the tread shoulders. The lower sidewall of FIG. 10a has angle of about 120 degrees with the axis of rotation, while the lower sidewall of FIG. 10b, which is more consistent to the cured tire position, has an angle of about 60 degrees.

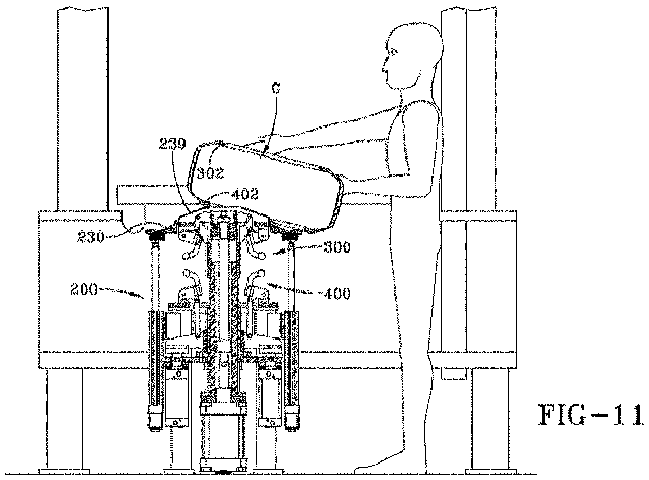

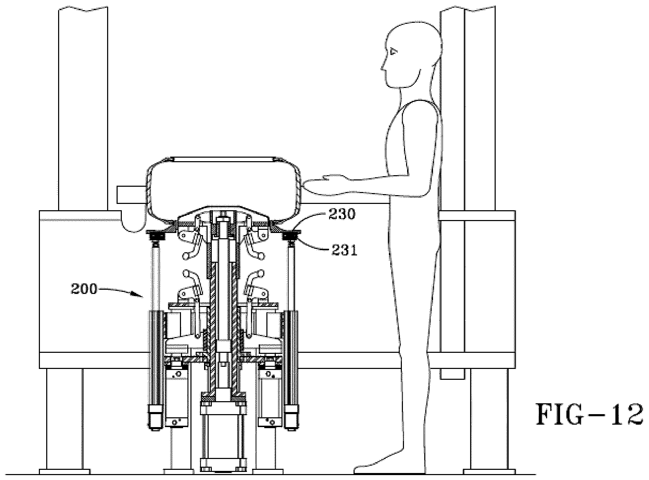

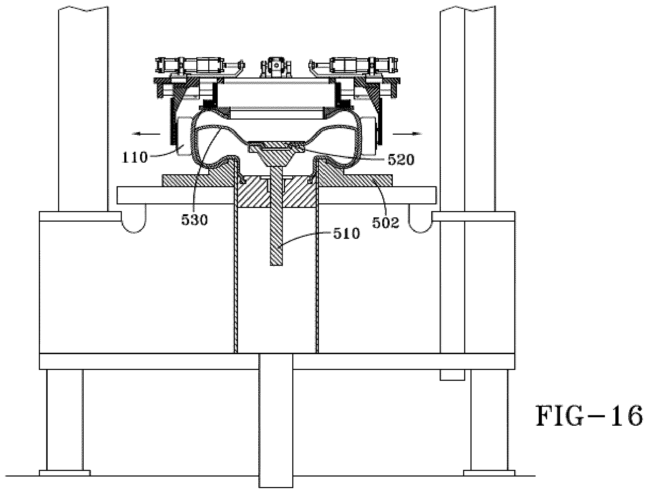

FIGS. 11-21 illustrate the process for rotational alignment of the bead areas of the green tire as well as the modified shaping cycle of the green tire in the tire curing press. FIG. 11 illustrates a green tire G being loaded by an operator (or alternatively, a machine (not shown) onto the tire preformer apparatus 200. The top hat 239 facilitates the proper centering of the tire bead and tire onto the lower bead ring 230 of the tire preforming apparatus 200 as shown in FIG. 12. The lower bead support ring 230 is then lowered into position via the translating support plate 231 using hydraulic cylinders.

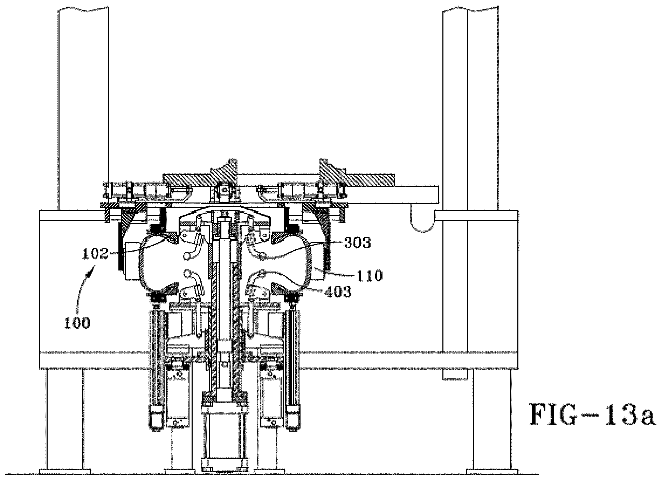

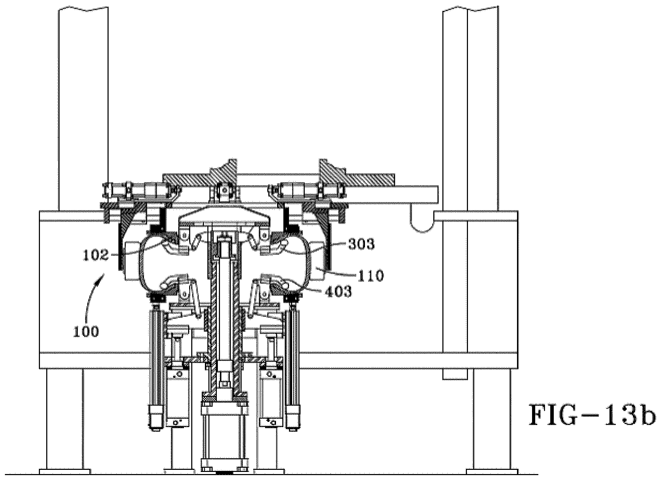

After the tire is loaded onto the tire preformer apparatus 200, the tire loader is lowered onto the green tire until the upper bead support ring 102 mounted on the loader is registered with the upper bead of the tire. The tire loader is further lowered until the green tire beads are placed at the curing height of the beads in the closed mold. FIG. 13a illustrates that the tire loader is lowered until the upper bead support ring 102 mounted on the loader is in engagement with the upper bead of the green tire. Likewise, as the loader is lowered the lower bead of the tire is kept registered with the lower bead support ring 230 of the performer apparatus 200. Next, the tire bead clamps are rotated into position as shown in Fig 13b, resulting in rotation of the bead area components 302, 402 of the tire into engagement with the upper and lower bead rings wherein the bead clamps function to clamp or hold the bead area components into mating engagement with the respective bead support rings. At this time, the green tire shape is equivalent to the molded tire shape. The green tire is held in this position for at least 1-2 minutes. The green tire is then rotationally indexed and actuation of the clamps is repeated until the green tire has rotated a full circle. The rotational indexing of the green tire ensures uniform shaping of the bead component areas by the bead clamps.

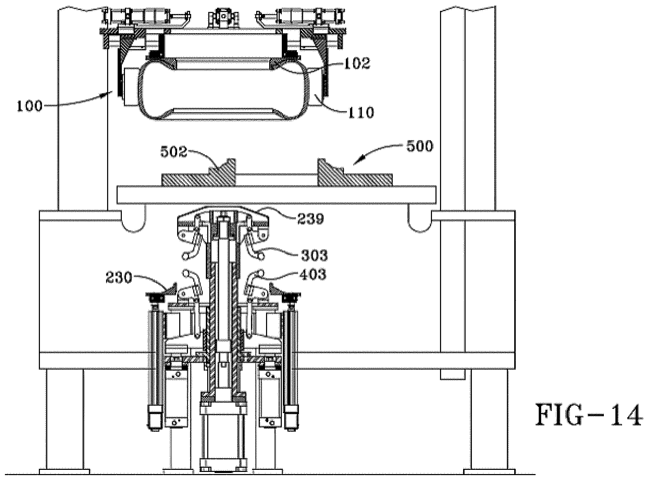

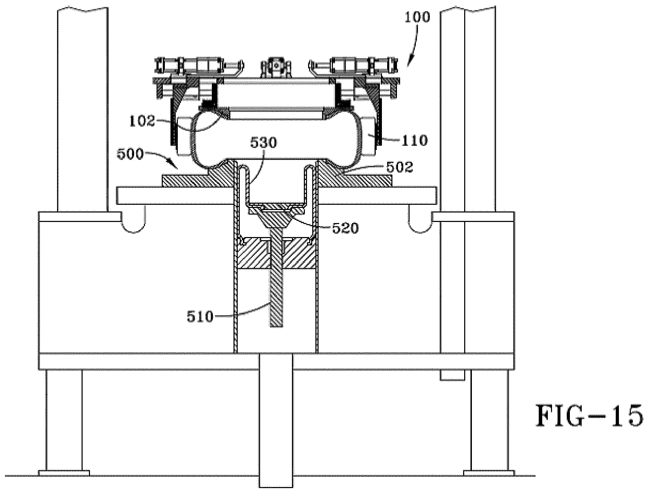

FIG. 14 illustrates the tire being removed from the preformer machine 200 by the loader 100. The loader grips the outer crown portion or outer diameter of the tire by a plurality of radially spaced paddles 110 while maintaining the shape of the upper bead area 302 of the tire by the upper bead support ring 102. The tire loader 100 has been modified to include an upper bead support ring which maintains the shape of the upper bead area of the tire. The tire loader has also been modified to utilize the outer radial paddles in order to maintain the rotation and alignment of the beads. The tire loader lifts the tire off of the preformer machine and lowers the green tire bottom bead onto the bottom bead ring 502 of the mold 500 as shown in FIG. 15.

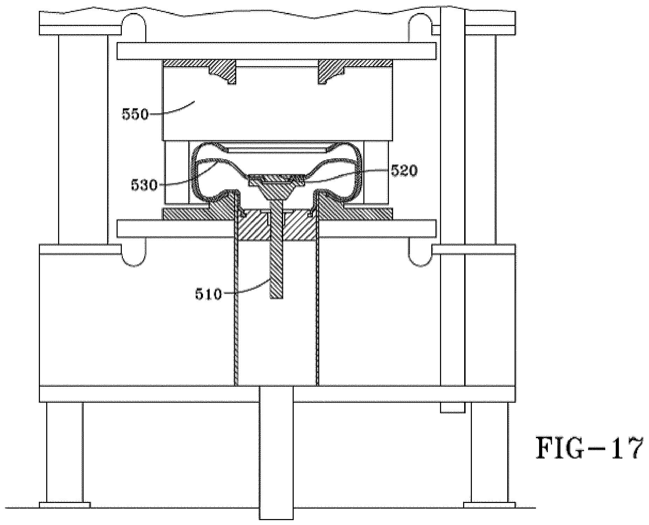

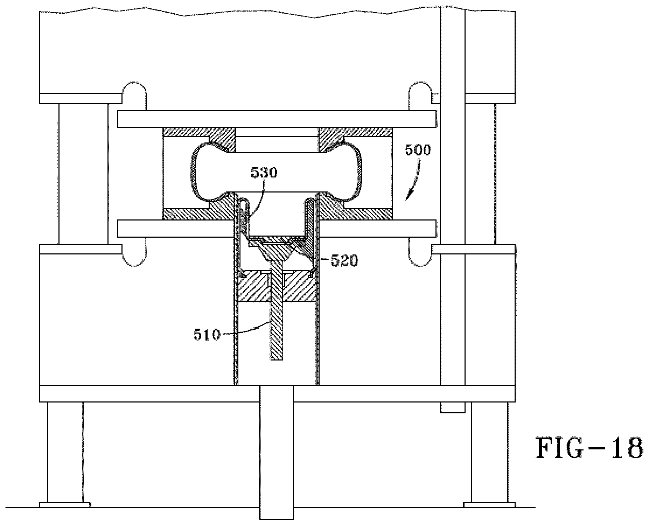

FIG. 15 illustrates the green tire in the tire mold, while the outer surface of the tire is still in engagement with the paddles of the loader. The internal shaping process is initiated while the upper bead area of the tire is in engagement with the upper bead support ring 102 of the loader, and while the paddles grip the outer perimeter of the tire. The upper bead support ring 102 prevents the shaping bladder from reverse rotating the top bead area of the tire as shown in FIG. 2b. The center post 510 and top bladder clamp ring 520 are raised until they are both located inside the green tire. The curing bladder 530 is inflated with low pressure fluid. The loader paddles 110 are released from gripping the green tire after the bladder is about 70% to about 80% inflated. The loader is then moved out of the way so that the top part 550 of the mold can be closed. Low pressure is used to continue to shape the bladder as shown in FIG. 17. After the mold is closed, the curing bladder is deflated and the center post and bladder ring is lowered into its home position as shown in FIG. 18.

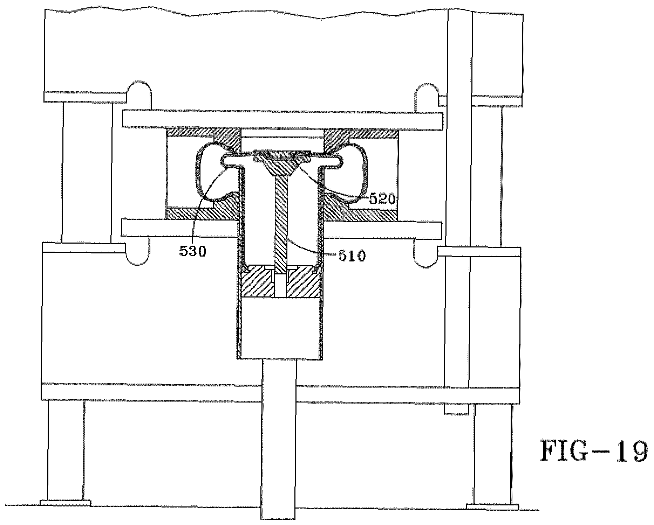

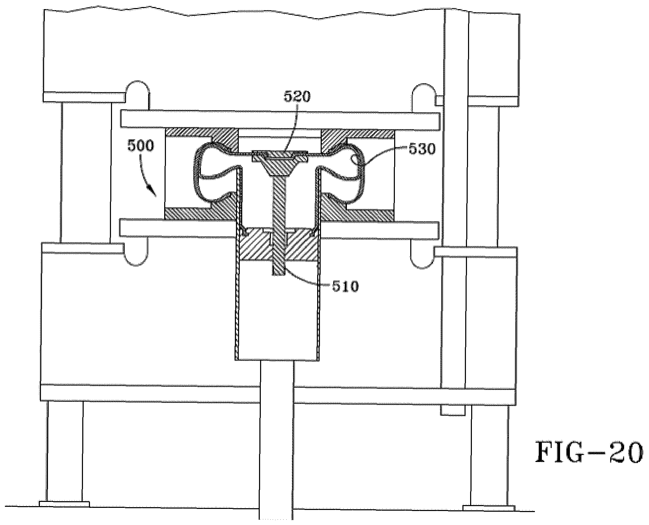

FIG. 19 illustrates the continuation of the shaping process. The center post and curing bladder ring are raised a second time in line with the upper bead of the tire or cured height. As shown in FIG. 20, the top and bottom curing bladder rings and the outside bladder sleeve are each raised in order to roll the curing bladder back inside the green tire in order to reshape the tire a second time at low pressure.

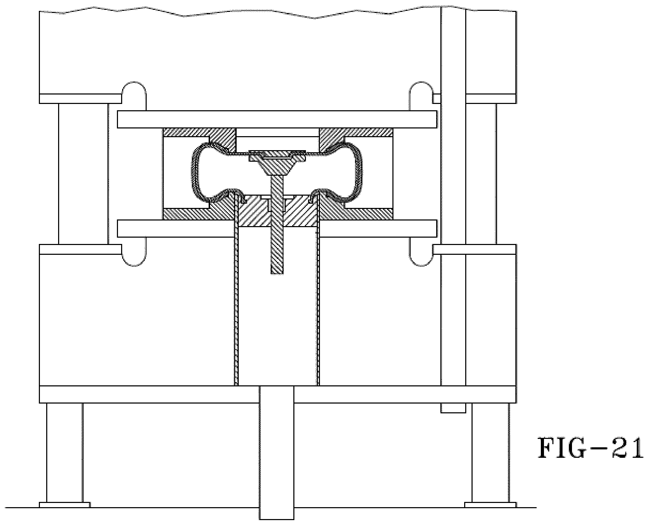

FIG. 21 illustrates the mold in the closed position, with the bladder shaped and centered in the green tire. The cure cycle is then completed and the green tire is removed.

## Claims

1. A tire loader comprising a support frame, a plurality of tire engaging chucks or paddles (110) mounted to the support frame and arranged in an annular manner to grip a tire, each tire engaging chuck or paddle (110) being radially movable, the tire loader (100) further including a bead support ring (102), **characterized in that** the bead support ring (102) is rotatable.

2. The tire loader of claim 1 wherein the bead support ring (102) is positioned adjacent the tire engaging chucks or paddles (110).

3. The tire loader of claim 1 or 2 wherein the plurality of chucks or paddles (110) are positioned for grasping an outer portion of the tire.

4. The tire loader of claim 1 or 2 wherein the plurality of tire engaging chucks or paddles (110) are arranged in an annular manner to grip the tire.

5. The tire loader of claim 1 wherein the tire engaging chucks (110) are arranged to grip only the crown of the outside of the tread area of the tire.

6. A green tire preformer and tire loader system, the system comprising a tire loader (100) in accordance with claim 1 or 2 and a green tire preformer apparatus for rotating the bead areas (14a, 14b) of the tire into the cured position of the tire and into alignment with each other, the green tire preformer apparatus (200) comprising:
a first support having a first bead support ring (230) to support a first tire bead area (14a) of a green tire, the green tire having opposing first and second tire bead areas (14a, 14b); and a second support having a second bead support ring (102) positionable for engagement with the second tire bead area (14b); and first and
second rotatable bead clamps (300, 400), wherein the first and second rotatable bead clamps (300, 400) are positioned to clamp the first and second bead areas (14a, 14b) into engagement with the first and second bead support rings (230, 102), respectively.

7. The system of claim 6 wherein the second support is mounted on the tire loader (100).

8. A method for bringing the bead areas of green tire into alignment with each other, the green tire having opposing first and second tire bead areas (14a, 14b), the method comprising the steps: providing a rotatable first bead support ring (102) and mounting a lower bead of the green tire onto said first bead support ring (102); providing a second bead support ring (203) and moving the second bead support ring (203) into engagement with an upper bead of the tire until the tire is in a desired pre-mold shape; and rotating the first and second bead areas (14a, 14b) of the tire in the desired pre-mold shape, wherein the method further comprises the steps of gripping only the crown of the outside of the tread area of the tire with a plurality of tire chucks or paddles (110) while holding the upper tire bead area against an upper bead support ring, and then moving the gripped green tire into a mold.

9. The method of claim 8 further comprising providing first and second rotatable bead clamps (300, 400); rotating the first and second rotatable bead clamps (300, 400) into engagement with the first and second bead areas (14a, 14b); and then clamping the first and second bead areas (14a, 14b) against the first and second bead support rings (102, 230), respectively.

10. The method of claims 9 further comprising the step of positioning the first and second bead clamps (300, 400) adjacent the first and second bead rings (102, 230), respectively.

11. The method of claim 8 further comprising the step of holding the tire in a fixed preformer position for at least 2 minutes.

## Patentansprüche

1. Reifenlader, umfassend ein Stützgestell, eine Vielzahl von am Reifen angreifenden Spannvorrichtungen oder Paddeln (110), die an dem Stützgestell montiert und ringförmig angeordnet sind, um einen Reifen zu ergreifen, wobei jede an dem Reifen angreifende Spannvorrichtung oder Paddel (110) radial bewegbar ist, wobei der Reifenlader (100) weiter einen Wulststützring (102) beinhaltet, **dadurch gekennzeichnet, dass** der Wulststützring (102) rotierbar ist.

2. Reifenlader nach Anspruch 1, wobei der Wulststützring (102) benachbart zu den am Reifen angreifenden Spannvorrichtungen oder Paddeln (110) angeordnet ist.

3. Reifenlader nach Anspruch 1 oder 2, wobei die Vielzahl von Spannvorrichtungen oder Paddeln (110) zum Ergreifen eines äußeren Teils des Reifens angeordnet ist.

4. Reifenlader nach Anspruch 1 oder 2, wobei die Vielzahl von am Reifen angreifenden Spannvorrichtungen oder Paddeln (110) ringförmig angeordnet ist, um den Reifen zu ergreifen.

5. Reifenlader nach Anspruch 1, wobei die am Reifen angreifenden Spannvorrichtungen (110) dazu angeordnet sind, nur den Zenit der Außenseite des Laufflächenbereichs des Reifens zu ergreifen.

6. Reifenrohlingvorformer- und Reifenlader-System, wobei das System einen Reifenlader (100) gemäß Anspruch 1 oder 2 und eine Reifenrohlingvorformervorrichtung zum Rotieren der Wulstbereiche (14a, 14b) des Reifens in die vulkanisierte Position des Reifens und in gegenseitige Ausrichtung umfasst, wobei die Reifenrohlingvorformervorrichtung (200) umfasst: ein erstes Stützelement mit einem ersten Wulststützring (230) zum Stützen eines ersten Reifenwulstbereichs (14a) eines Reifenrohlings, wobei der Reifenrohling einen ersten und einen zweiten Reifenwulstbereich (14a, 14b), die einander gegenüberliegen, aufweist; und ein zweites Stützelement mit einem zweiten Wulststützring (102), der zum Eingriff mit dem zweiten Reifenwulstbereich (14b) positionierbar ist; und eine erste und eine zweite rotierbare Wulstklemme (300, 400), wobei die erste und die zweite rotierbare Wulstklemme (300, 400) so angeordnet sind, dass sie den ersten und den zweiten Wulstbereich (14a, 14b) in Eingriff mit dem ersten beziehungsweise dem zweiten Wulststützring (230, 102) klemmen.

7. System nach Anspruch 6, wobei das zweite Stützelement an dem Reifenlader (100) montiert ist.

8. Verfahren zum miteinander in Ausrichtung Bringen der Wulstbereiche eines Reifenrohlings, wobei der Reifenrohling einen ersten und einen zweiten Reifenwulstbereich (14a, 14b), die einander gegenüberliegen, aufweist, wobei das Verfahren folgende Schritte umfasst: Bereitstellen eines rotierbaren ersten Wulststützrings (102) und Montieren eines unteren Wulsts des Reifenrohlings auf dem ersten Wulststützring (102); Bereitstellen eines zweiten Wulststützrings (203) und Bewegen des zweiten Wulststützrings (203) in Eingriff mit einem oberen Wulst des Reifens, bis sich der Reifen in einer gewünschten Vor-Heizform-Ausformung befindet; und Rotieren des ersten und des zweiten Wulstbereichs (14a, 14b) des Reifens in der gewünschten Vor-Heizform-Ausformung, wobei das Verfahren weiter die Schritte des Ergreifens nur des Zenits der Außenseite des Laufflächenbereichs des Reifens mit einer Vielzahl von Reifenspannvorrichtungen oder Paddeln (110), während der obere Reifenwulstbereich gegen einen oberen Wulststützring gehalten wird, und dann Bewegens des ergriffenen Reifenrohlings in eine Heizform umfasst.

9. Verfahren nach Anspruch 8, weiter das Bereitstellen einer ersten und einer zweiten rotierbaren Wulstklemme (300, 400); Rotieren der ersten und der zweiten rotierbaren Wulstklemme (300, 400) in Eingriff mit dem ersten und dem zweiten Wulstbereich (14a, 14b); und dann Klemmen des ersten und des zweiten Wulstbereichs (14a, 14b) gegen den ersten beziehungsweise den zweiten Wulststützring (102, 230) umfassend.

10. Verfahren nach Anspruch 9, weiter den Schritt des Anordnens der ersten und der zweiten Wulstklemme (300, 400) benachbart zu dem ersten beziehungsweise dem zweiten Wulstring (102, 230) umfassend.

11. Verfahren nach Anspruch 8, weiter den Schritt des mindestens 2 Minuten lang in einer feststehenden Vorformerposition Haltens des Reifens umfassend.

## Revendications

1. Dispositif de chargement de bandage pneumatique comprenant un cadre de support, plusieurs palettes ou mandrins (110) pour la mise en contact avec un bandage pneumatique, montés sur le cadre de support et disposés en une configuration annulaire pour saisir un bandage pneumatique, chaque palette ou mandrin (110) de mise en contact avec un bandage pneumatique étant mobile en direction radiale, le dispositif de chargement de bandage pneumatique (100) englobant en outre un anneau de support de talon (102), **caractérisé en ce que** l'anneau de support de talon (102) est rotatif.

2. Dispositif de chargement de bandage pneumatique selon la revendication 1, dans lequel l'anneau de support de talon (102) est disposé en position adjacente aux palettes ou aux mandrins (110) de mise en contact avec le bandage pneumatique.

3. Dispositif de chargement de bandage pneumatique selon la revendication 1 ou 2, dans lequel lesdits plusieurs palettes ou mandrins (110) sont disposés de manière à pouvoir saisir une portion externe du bandage pneumatique.

4. Dispositif de chargement de bandage pneumatique selon la revendication 1 ou 2, dans lequel lesdits plusieurs palettes ou mandrins (110) sont disposés en une configuration annulaire pour saisir le bandage pneumatique.

5. Dispositif de chargement de bandage pneumatique selon la revendication 1, dans lequel les mandrins (110) de mise en contact avec le bandage pneumatique sont disposés de manière à saisir uniquement le sommet de l'extérieur de la zone du bandage pneumatique correspondant à la bande de roulement.

6. Système de dispositif de chargement de bandage pneumatique et de formation d'une ébauche de bandage pneumatique non vulcanisé, le système comprenant un dispositif de chargement de bandage pneumatique (100) selon la revendication 1 ou 2 et un appareil de formation d'une ébauche de bandage pneumatique non vulcanisé pour la mise en rotation des zones du bandage pneumatique (14a, 14b) correspondant aux talons afin de les amener dans la configuration vulcanisée du bandage pneumatique et en alignement réciproque, l'appareil (200) de formation d'une ébauche de bandage pneumatique comprenant :
un premier support possédant un premier anneau de support de talon (230) pour supporter une première zone (14a) correspondant au talon d'un bandage pneumatique non vulcanisé, le bandage pneumatique non vulcanisé possédant une première et une seconde zones opposées (14a, 14b) correspondant aux talons du bandage pneumatique ; et un second support possédant un second anneau de support de talon (102) qui peut venir se disposer pour une mise en contact avec la seconde zone (14b) correspondant au talon du bandage pneumatique ; ainsi que des premier et second dispositifs rotatifs de serrage des talons (300, 400), lesdits premier et
second dispositifs rotatifs de serrage des talons (300, 400) étant disposés pour une mise en contact par serrage desdites première et seconde zones (14a, 14b) correspondant aux talons avec les premier et second anneaux de support de talons (230, 102), respectivement.

7. Système selon la revendication 6, dans lequel le second support est monté sur le dispositif de chargement de bandage pneumatique (100).

8. Procédé pour amener en alignement réciproque les zones d'un bandage pneumatique non vulcanisé correspondant aux talons, le bandage pneumatique non vulcanisé possédant des première et seconde zones (14a, 14b) correspondant aux talons du bandage pneumatique, le procédé comprenant les étapes consistant à : procurer un premier anneau rotatif de support de talon (102) et monter un talon inférieur du bandage pneumatique non vulcanisé sur ledit premier anneau de support de bandage pneumatique (102) ; procurer un second anneau de support de talon (203) et amener le second anneau de support de talon (203) en contact avec un talon supérieur du bandage pneumatique jusqu'à ce que le bandage pneumatique prenne une configuration de prémoulage désirée ; et mettre les première et seconde zones (14a, 14b) du bandage pneumatique correspondant aux talons en rotation dans la configuration de prémoulage désirée, le procédé comprenant en outre les étapes consistant à saisir uniquement le sommet de l'extérieur de la zone du bandage pneumatique correspondant au talon avec plusieurs mandrins ou palettes (110) de bandage pneumatique tout en maintenant la zone correspondant au talon supérieur du bandage pneumatique contre un anneau de support de talon supérieur, et ensuite à insérer dans un moule le bandage pneumatique saisi non vulcanisé.

9. Procédé selon la revendication 8, comprenant en outre le fait de : procurer des premier et second dispositifs rotatifs de serrage de talons (300, 400) ; mettre en rotation les premier et second dispositifs rotatifs de serrage de talons (300, 400) en contact avec les première et seconde zones (14a, 14b) correspondant aux talons ; et serrer ensuite les première et seconde zones (14a, 14b) correspondant aux talons contre les premier et second anneaux de support de talons (102, 230), respectivement.

10. Procédé selon la revendication 9, comprenant en outre l'étape consistant à disposer les premier et second dispositifs de serrage de talons (300, 400) en position adjacente aux premier et second anneaux de support de talons (102, 230), respectivement.

11. Procédé selon la revendication 8, comprenant en outre l'étape consistant à maintenir le bandage pneumatique dans une position fixe de formation d'ébauche pendant au moins 2 minutes.
